(19) Europäisches Patentamt

European Patent Office

Office européen des brevets

(11) Veröffentlichungsnummer: **0 458 067 B1**

(12) **EUROPÄISCHE PATENTSCHRIFT**

(45) Veröffentlichungstag der Patentschrift: **05.07.95**

(51) Int. Cl.⁶: **C07F 9/30**, A01N 57/12, C07F 9/02

(21) Anmeldenummer: **91106295.8**

(22) Anmeldetag: **19.04.91**

(54) **Verfahren zur Herstellung von Bis(hydroxymethyl)phosphinaten.**

(30) Priorität: **19.05.90 DE 4016258**

(43) Veröffentlichungstag der Anmeldung:
**27.11.91 Patentblatt 91/48**

(45) Bekanntmachung des Hinweises auf die Patenterteilung:
**05.07.95 Patentblatt 95/27**

(84) Benannte Vertragsstaaten:
**BE CH DE FR GB IT LI NL**

(56) Entgegenhaltungen:

**ISRAEL STATE RECORDS, PATENTS AND DE-SIGNS JOURNAL, 31. Okfober 1983, para-graph54: "Process for the flame-proofing of textiles" Graph Press Ltd, Jerusalem,IL; & IL-A-60 453 (YEDA RESEARCH ANDDEVELOP-MENT CO., LTD)**

**ZEITSCHRIFT FÜR ANORGANISCHE UND ALLGEMEINE CHEMIE, Band 394, Nr. 1-2, November 1972, Seiten 117-124**

(73) Patentinhaber: **HOECHST AKTIENGESELL-SCHAFT**
**Brüningstrasse 50**
**D-65929 Frankfurt am Main (DE)**

(72) Erfinder: **Svara, Jürgen, Dr.**
**Mainstrasse 36**
**W-5000 Köln (DE)**

**Beschreibung**

Die Erfindung betrifft ein Verfahren zur Herstellung von Bis(hydroxymethyl)phosphinaten der Formel

$$M^{n+}[(HOCH_2)_2 PO_2^-]_n$$

worin M = Li, Na, K, Ca, Mg, Zn oder Al und n die Wertigkeit des betreffenden Elements bedeutet und Werte von 1, 2 oder 3 annimmt.

Bis(hydroxymethyl)phosphinate dienen z.B. zur Herstellung von Bis(aminomethyl)phosphinaten, die als Wirkstoffe herbizider und pflanzenwachstumsregulierender Mittel verwendet werden können (vgl. DE-28 05 074 A1). Die Ca- oder Mg-Salze der Bis(hydroxymethyl)phosphinsäure können als Binder in basischen Feuerfestrohstoffen eingesetzt werden (vg. DE-36 16 168 A1).

Die Herstellung von Bis(hydroxymethyl)phosphinsäure erfolgt gemäß DE-28 05 074 A1 durch Umsetzung einer 50 %igen wäßrigen Lösung von Phosphinsäure oder Natriumphosphinat mit Paraformaldehyd und konz. Salzsäure unter Normaldruck bei Siedetemperatur und einer Verweilzeit von 50 Stunden. Um etwa 5 kg Bis(hydroxymethyl)phosphinsäure zu erhalten, müssen 35 Liter konz. Salzsäure eingesetzt werden. Der große Überschuß an Salzsäure muß bei der Aufarbeitung durch Eindampfen entfernt werden.

Es ist bekannt, daß Formaldehyd in salzsaurem Milieu Bis(chlormethyl)ether und Chlormethyl-methylether bildet. Bei der Umsetzung und der Aufarbeitung ist Sorge zu tragen, daß diese stark karzinogenen Verbindungen nicht in die Umwelt gelangen. Man muß sie daher vor der Aufarbeitung vollständig zerstören.

Gemäß DE-36 16 168 A1 wird bei der Herstellung von Mg- oder Ca-bis(hydroxymethyl)-phosphinat von freier Phosphinsäure ausgegangen und ein Zusatz anderer Säuren vermieden. Die Phosphinsäure wird allerdings ihrerseits aus ihren Salzen durch Ansäuern und entsprechende Aufarbeitung hergestellt (Ullmann's Encyklopädie der technischen Chemie, 4. Aufl. Band 18 (1979), Seiten 304 - 305).

Überraschenderweise gelang es nun, - und darin ist die Aufgabe der Erfindung zu sehen - bei der Herstellung von Bis(hydroxymethyl)phosphinaten saure Reaktionsbedingungen ganz zu vermeiden.

Im einzelnen ist das Verfahren der Erfindung dadurch gekennzeichnet, daß man Phosphinate der Formel $M^{n+}[H_2PO_2^-]n$ mit Formaldehyd, Trioxan oder Paraformaldehyd in Wasser in einem Autoklaven bei Temperaturen von 100° bis 200°C, vorzugsweise 130° bis 170°C, unter dem sich einstellenden Druck bei einer Verweilzeit von 5 bis 20 Stunden umsetzt.

Beispiel 1

60 g Natriumphosphinat-Monohydrat und 36 g Paraformaldehyd werden in 70 ml Wasser gelöst und in einem teflonbeschichteten Autoklaven unter Rühren auf 145 - 150°C Innentemperatur aufgeheizt. Der Druck steigt dabei auf 7 bar an. Nach 17 Stunden wird abgekühlt. Der Druck geht dabei wieder auf 1 bar zurück. Die erhaltene klare, farblose Lösung zeigt im $^{31}$P-NMR-Spektrum einen Gehalt von 70 mol% Bis-(hydroxymethyl)phosphinsäure-Natriumsalz. Nach Eindampfen am Rotationsverdampfer erhält man ein farbloses, glasartig erstarrtes Salz. Schmelzpunkt 103°C.

| Elementaranalyse (%): | ber.: | Na 15,53; | P 20,92 |
|---|---|---|---|
| | gef.: | Na 15,1 ; | P 20,8 |

Beispiel 2

Aus 87,4 g Magnesiumphosphinat-Hexahydrat, 42 g Paraformaldehyd und 96 g Wasser erhält man analog Beispiel 1 nach 18 Stunden bei 145 - 150°C eine farblose Lösung. Das P-NMR-Spektrum zeigt 70 mol% Bis(hydroxymethyl)phosphinsäure-Magnesiumsalz. Nach Eindampfen verbleibt ein farbloses, kristallines Salz. Schmelzpunkt 116°C.

| Elementaranalyse (%): | ber.: | Mg 8,86; | P 22,58 |
|---|---|---|---|
| | gef.: | Mg 8,0 ; | P 20,9 |

Beispiel 3

60 g Calciumphosphinat, 44 g Paraformaldehyd und 70 g Wasser ergeben analog Beispiel 1 laut P-NMR-Spektrum 83,5 mol% Bis(hydroxymethyl)phosphinsäure-Calciumsalz, das beim Eindampfen als farbloses, kristallines Produkt anfällt. Schmelzpunkt 278°C.

| Elementaranalyse (%): | ber.: | Ca 13,81; | P 21,35 |
|---|---|---|---|
| | gef.: | Ca 13,2 ; | P 20,9 |

Beispiel 4

87,4 g Magnesiumphosphinat-Hexahydrat und 113 g 37 %ige Formaldehyd-Lösung reagieren analog Beispiel 1 in 10 Stunden bei 150°C laut P-NMR-Spektrum zu 77 mol% Bis(hydroxymethyl)phosphinsäure-Magnesiumsalz.

Beispiel 5

30 g Aluminiumphosphinat, 24,3 g Paraformaldehyd und 80 g Wasser reagieren analog Beispiel 1 in 10 Stunden bei 145 - 150°C zu einem farblosen Kristallbrei, der abgesaugt und getrocknet wird. Der Gehalt an Bis(hydroxymethyl)phosphinsäure-Aluminiumsalz liegt laut P-NMR-Spektrum bei 95,9 mol% der erfaßten phosphorhaltigen Komponenten. Die Substanz zersetzt sich ohne zu schmelzen ab etwa 340°C.

### Röntgen-Pulverdiffraktogramm:

| $d\,[\overset{\circ}{A}]$ | $I/I_o\,[\%]$ | $d\,[\overset{\circ}{A}]$ | $I/I_o\,[\%]$ |
|---|---|---|---|
| 8,4768 | 100,00 | 3,2091 | 6,55 |
| 4,9038 | 2,55 | 2,8306 | 3,70 |
| 4,5296 | 3,21 | 2,6918 | 3,91 |
| 4,2891 | 3,10 | 2,4518 | 2,58 |
| 4,0612 | 2,27 | 2,3585 | 4,68 |

**Patentansprüche**

1. Verfahren zur Herstellung von Bis(hydroxymethyl)phosphinaten der Formel

$$M^{n+}[(HOCH_2)_2PO_2^-]_n$$

worin M = Li, Na, K, Ca, Mg, Zn oder Al und n die Wertigkeit des betreffenden Elements bedeutet und Werte von 1, 2 oder 3 annimmt, dadurch gekennzeichnet, daß man Phosphinate der Formel $M^{n+}[H_2PO_2^-]_n$ mit Formaldehyd, Trioxan oder Paraformaldehyd in Wasser in einem Autoklaven bei Temperaturen von 100° bis 200°C unter dem sich einstellenden Druck bei einer Verweilzeit von 5 bis 20 Stunden umsetzt.

2. Verfahren nach Anspruch 1, dadurch gekennzeichnet, daß die Umsetzung bei Temperaturen von 130° bis 170°C erfolgt.

**Claims**

1. A process for the preparation of a bis(hydroxymethyl)phosphinate of the formula

$$M^{n+}[(HOCH_2)_2PO_2{}^-]_n$$

in which M is Li, Na, K, Ca, Mg, Zn or Al, and n is the valency of the element concerned and has a value of 1, 2 or 3, which comprises reacting a phosphinate of the formula $M^{n+}[H_2PO_2{}^-]_n$ with formaldehyde, trioxane or paraformaldehyde in water in an autoclave at a temperature of from $100°$ to $200°C$ under the autogenous pressure at a residence time of from 5 to 20 hours.

2. The process claimed in claim 1, wherein the reaction is carried out at a temperature of from $130°$ to $170°C$.

**Revendications**

1. Procédé de production de bis(hydroxyméthyl)phosphinates de formule :

$$M^{n+}[(HOCH_2)_2PO_2{}^-]_n$$

où M = Li, Na, K, Ca, Mg, Zn ou Al et n désigne la valence de l'élément considéré et adopte des valeurs de 1, 2 ou 3, caractérisé en ce qu'on met à réagir des phosphinates de formule $M^{n+}[H_2PO_2{}^-]_n$ avec du formaldéhyde, du trioxanne ou du paraformaldéhyde dans de l'eau, en autoclave, à des températures comprises entre $100°$ et $200°C$ sous la pression qui se forme, pour une durée de séjour de 5 à 20 h.

2. Procédé selon la revendication 1, caractérisé en ce que la réaction a lieu à des températures comprises entre $130°$ et $170°C$.